# EUROPEAN PATENT SPECIFICATION

(11) **EP 0 467 529 B1**
(45) Date of publication and mention of the grant of the patent: **04.12.1996**
(21) Application number: 91305458.1
(22) Date of filing: 17.06.1991
(51) Int. Cl.: A01N 25/32, A01N 43/40, A01N 43/90

(54) **Herbicidal compositions**
Herbizide Zusammensetzungen
Compositions herbicides

(30) Priority: 10.07.1990 GB 9015134
(43) Date of publication of application: 22.01.1992
(73) Proprietor: ZENECA LIMITED, London W1Y 6LN (GB)
(72) Inventor: Heylings, Jonathan Roy, Macclesfield, Cheshire SK10 3DX (GB)
(74) Representative: Roberts, Alison Christine

(56) References cited:
- EP-A- 0 022 666
- FR-A- 2 146 504
- FR-A- 2 347 883
- US-A- 4 160 017
- US-A- 4 764 206
- CHEMICAL PATENTS INDEX, BASIC ABSTRACTS JOURNAL, Section Ch, Week 8741, 09 December 1987, Derwent Publications Ltd., London (GB); Class C, AN 288446

## Description

This invention relates to herbicidal compositions containing a herbicidal bipyridylium diquaternary salt as an active ingredient.

Various herbicidal bipyridylium diquaternary salts are described in United Kingdom Patent Specification No. 785732, 813531 and 813532. Certain of these compounds (e.g. salts of paraquat and diquat; the chemical identity of these compounds is given later in this specification) are in widespread use in agriculture, and are manufactured for sale in the form of concentrated aqueous solutions. When required for use, these concentrated solutions are diluted with water to form a solution which is then sprayed upon unwanted plants. When used with due care, and in accordance with recommended procedures, the concentrated aqueous solutions present no hazard. However, hazards may develop if adherence to the recommended handling practices is not maintained. Thus it may happen that an operator may decant some of the concentrate into a domestic container such as a beverage bottle for subsequent use in his own garden at home. The hazard associated with such a practice is of course that a child or incautious adult coming upon the bottle may swallow some of the contents, with possible serious consequences.

Various methods have been proposed to reduce the likelihood of accidental swallowing of concentrated solutions of bipyridylium diquaternary salts in the circumstances described above. These include the inclusion of an odourant in the concentrate as a warning (see UK Patents 1406881 and 1570981), the inclusion of a water-soluble blue dye, and the inclusion of a substance to convert the concentrate into a thixotropic gel (see UK Patent 1395502).

Another approach to reducing the possibility of harmful effects following the ingestion of a bipyridylium salt concentrate has been to include an emetic in the concentrate, so that the concentrate will be removed by vomiting shortly after its ingestion (see UK Patent 1507407). A further approach has been to formulate the bipyridylium diquaternary salt as a multiple emulsion, as proposed in published European Patent Application No. 276911. In addition to methods of formulating bipyridylium herbicides so as to reduce the likelihood of accidental ingestion, a variety of methods has been proposed for formulating bipyridylium herbicides so as to improve their suitability for particular applications. Thus, it has been proposed to formulate an aqueous solution of paraquat as an invert emulsion in oil (see United States Patent 4115098) in order to reduce drift and evaporation of the droplets of spray when the paraquat is applied as a herbicide.

Various prior art documents disclose compositions containing bipyridylium salts such as paraquat or diquat together with a gelling agent. For example, JP 62201803 discloses compositions containing bipyridylium salts together with a gel forming organic polymer and a gelatinising agent. US 4160017 relates to similar compsitions containing a herbicidal bipyridylium salt, an emetic and, optionally, a gelling agent such as silica or xantham gum/sodium metaborate. US 4764206 also relates to paraquat or diquat compositions which contain thickening agents capable of increasing their viscosity or forming a gel. The compositions are said to be in a substantially solid state. These documents, therefore, all describe compositions containing a herbicidal bipyridylium salt and a gelling agent. None of these compositions are, however, are freely flowing liquids but, rather, they are all in the form of thickened, non-pourable gels.

According to the present invention there is provided an aqueous liquid herbicidal composition comprising a salt of paraquat or diquat, or a mixture thereof, in a concentration of at least 50 grams per litre, in admixture with from 10 to 400 grams per litre of magnesium trisilicate the composition further comprising an emetic and/or a purgative.

A further aspect of invention provides an aqueous liquid herbicidal comprising: (i) a herbicidal component comprising a salt of paraquat or diquat, or a mixture thereof; (ii) a gelling agent that will gel at the pH of human gastric juice; and (iii) an emetic and/or a purgative; wherein the ratio of the herbicidal component to the gelling agent is from 1:1 to 20:1.

According to a preferred aspect of the present invention, there is provided a herbicidal composition comprising an aqueous solution of a salt of paraquat or diquat, or a mixture thereof, in admixture with a gelling agent that will gel at the pH of human gastric juice, and an emetic. Preferably the aqueous compositions contain 50, and more preferably, 100 grams per litre or more of paraquat or diquat, or a mixture thereof.

The aqueous compositions may contain, for example, 200 grams or more per litre of paraquat or diquat or a mixture thereof.

The aqueous compositions of the invention may further comprise a purgative. They may also comprise a suspending agent to assist in keeping the gelling agent evenly dispersed throughout the composition during storage and transport.

If a quantity of a composition according to the invention is ingested, the acidity of the gastric juice (which ranges from pH1.5 to pH3.5) will cause the composition to gel in the stomach. Increasing the viscosity of the gastric contents slows down the rate of gastric emptying. The bipyridylium herbicide will consequently be trapped in the gel, and its movement from the stomach and into the absorptive small intestine will be impeded. Ideally, the gelling agent is one which will also reduce gastric acidity and therefore reduce local irritation of the gastric mucosal lining. The emetic present in the composition is absorbed rapidly and will in a short time cause expulsion of the gel containing the bipyridylium herbicide by vomiting, thereby preventing the ingested herbicide from moving further down the gastrointestinal tract, where absorption of the bipyridylium compound would otherwise take place. In preferred compositions according to the invention, a purgative is present in the composition, to assist in removing any non-absorbed bipyridylium herbicide which has passed from the stomach into the small intestine despite the action of the emetic. In the event of a bipyridylium composition according to the invention being ingested, the combined effects of the gelling agent, emetic, and when included, the purgative, will be to substantially reduce the absorption of the bipyridylium compound from the gastrointestinal tract into the bloodstream, and thereby to reduce the oral toxicity of the concentrate.

Paraquat is the common name of the 1,1'-dimethyl-4,4'-bipyridylium cation, having the structure (I) (see formula sheet).

Diquat is the common name of the 1,1'-ethylene-2,2'-bipyridylium cation, having the structure (II) (see formula sheet).

Salts of paraquat and diquat necessarily contain anions carrying sufficient negative charges to balance the two positive charges on the bipyridylium nucleus.

Since the characteristic herbicidal effect of a bipyridylium quaternary cation is independent of the nature of the associated anion, the choice of the anion is a matter of convenience, depending, for example, on cost. Preferably the anion is one which gives rise to a salt of convenient water solubility. Examples of anions, which may be mono- or poly-valent, include acetate, benzenesulphonate, benzoate, bromide, butyrate, chloride, citrate, fluorosilicate, fumarate, fluoroborate, iodide, lactate, malate, maleate, methylsulphate, nitrate, propionate, phosphate, salicylate, succinate, sulphate, thiocyanate, tartrate, and p-toluenesulphonate. The salt of the herbicidal bipyridylium cation may be formed from a number of similar anions or mixtures of different ones. A salt having any particular desired anion may be prepared either by direct synthesis from reactants which include the desired anion, or by exchanging the anion of a previously prepared salt of the preferred anion by methods well known in the art, for example by passage of a solution of the previously prepared salt through an ion-exchange resin. For reasons of convenience and economy, paraquat is normally manufactured and sold as paraquat dichloride while diquat is manufactured and sold as diquat dibromide.

Since the characteristic herbicidal activity of a salt of a herbicidal bipyridylium quaternary cation resides in the cation only, it is customary to quote concentrations of active ingredient and rates of application in terms of the amount of bipyridylium quaternary cation used. Application rates and concentrations quoted in this specification therefore relate to the amount of bipyridylium quaternary cation unless otherwise stated.

Preferably, aqueous compositions according to the invention contain at least 50 grams per litre of paraquat or diquat or mixtures thereof. The compositions may contain 100 grams per litre or more of paraquat or diquat or mixtures thereof. Compositions containing 200 grams or more per litre, for example 300 grams per litre, may be prepared.

The gelling agent is preferably magnesium silicate, although other gelling agents may be used.

As commercially manufactured, (e.g. by reaction of sodium silicate with magnesium sulphate), magnesium silicate has a somewhat variable composition; thus, the ratio of silica (SiO₂) to magnesium oxide (MgO) in commercial technical grades of this material may range for example from about 3.3 to 1.5. Typical chemical analyses for two commercial technical grades of magnesium silicate (designated PDM15 and PDM 33) are given below.

| | PDM 33 | PDM 15 |
|---|---|---|
| MgO | 12-13% | 22.6-24.6% |
| SiO₂ | 61-65% | 49.5-53.5% |
| Molecular ratio SiO₂/MgO | ^{∼} 3.3 | ^{∼} 1.5 |
| Fe | 0.03% | 0.03% |
| SO₄ | 2.5% | 1.5% |
| Loss in weight on ignition at 900°C | 18-22% | 20-30% |

In preparing herbicidal compositions according to the present invention, it is preferred to use a grade of magnesium silicate which has a relatively high magnesium oxide content, for example magnesium silicate approximating to the composition 2MgO.3SiO₂. Magnesium silicate of this composition is often designated as magnesium trisilicate, and is so designated throughout this specification. Suitably purified and sterilised grades of this material are used pharmaceutically as an antacid.

Magnesium trisilicate is also known as magnesium mesotrisilicate. It is described in the Merck Index (Ninth Edition, published in 1976 by Merck and Co., Inc, Rahway, New Jersey, USA; see entry No. 5514 on pages 738-739) as an odourless, tasteless, slightly hygroscopic powder, having the chemical formula Mg₂Si₃O₈. It is usually hydrated to some extent. According to the British Pharmacopoeia, 1988, volume 1, page 348 (published by H M Stationery Office, London), magnesium trisilicate is a hydrated magnesium silicate of the approximate composition 2MgO.3SiO₂ containing water of crystallisation. The pharmaceutical grade contains not less than the equivalent of 29.0% of MgO, and not less than the equivalent of 65.0% of SiO₂, both calculated with reference to the substance after ignition at 900°C. The use of magnesium trisilicate as a gelling agent in the compositions of the present invention has the advantage that it reduces gastric acidity, and thereby, as mentioned above, reduces local irritation of the gastric mucosal lining. Magnesium trisilicate and the silicon dioxide gel produced in the stomach both have adsorbent properties. This reduces the bioavailability of bipyridylium salts when they are in concentrated solution. The magnesium trisilicate is preferably present in a concentration of from 10 to 400 grams per litre of the composition, and more preferably in a concentration of from 10 - 100 grams per litre. Since magnesium trisilicate is insoluble in water, it may tend to settle to the bottom of the container in which the composition is stored. Liquid compositions of the invention containing magnesium trisilicate therefore preferably also comprise a suspending agent, to assist in keeping the magnesium trisilicate dispersed homogeneously throughout the composition. Examples of suitable suspending agents include bacterial polysaccharides, for example the material known as xanthan gum, and in particular the xanthan gum sold under the trade name "KELZAN". Other suitable suspending agents include alginates. The suspending agents may be present in a concentration of for example from 0.01 gram to 100 grams per litre of the composition.

A variety of known emetics may be used in the compositions of the invention. However, preferred emetics are those compounds disclosed in UK Patent No. 1507407 for use in formulations of bipyridylium herbicides, and a particularly preferred emetic is 2-amino-6-methyl-5- oxo-4-n-propyl-4, 5-dihydro-5-triazolo[1,5-a]-pyrimidine, having the structural formula (A) (see formula sheet).

The amount of emetic used in the composition will vary depending upon the particular type of emetic used, but when an emetic of the class disclosed in UK Patent No. 1507407 is used, the concentration of emetic is preferably from 0.1 to 5 grams per litre of the composition.

For a composition containing 200 grams per litre of bipyridylium compound, a concentration of 1.5 to 2.0 grams per litre of emetic is preferred.

When the composition of the invention contain a purgative, this is preferably magnesium sulphate. The concentration of magnesium sulphate is preferably from 10 to 400 grams per litre of the composition, and more preferably from 10 to 100 grams per litre.

The compositions of the invention may also contain further ingredients for example one or more surface-active agents.

Surface-active agents may be cationic, non-ionic or anionic. Generally speaking cationic and non-ionic surface-agents are preferred to anionic surface-active agents for use in the compositions of the invention, since the latter may interact undesirably with the bipyridylium quaternary salt in the compositions, but anionic surface-active agents may be used where such interactions do not occur. Examples of non-ionic surface-active agents for use in the compositions of the invention include the condensation products of ethylene oxide with alkyl phenols such as octylphenol, nonylphenol and octylcresol for example the condensation product of p-nonylphenol with 8 molar proportions with of ethylene oxide sold under the trade name of Synperonic NP8. Other non-ionic agents are the partial esters derived from long chain fatty acids and hexitol anhydrides, for example sorbitan monolaurate; the condensation products of the said partial esters with ethylene oxide; and the lecithins. Examples of cationic surface-active agents include quaternary salts and condensates of ethylene oxide with amines, for example the substances sold under the Trade Mark "Ethomeen", "Ethoduomeen", "Duoquad" and "Arquad". A particular example comprises the condensate of a C₁₃ to C₁₅ mixture of synthetic primary amines with 15 molar proportions of ethylene oxide sold under the trade name "Synprolam" 35x15. The proportion of surface-active agent present in the aqueous compositions of the invention is not highly critical and a suitable proportion may readily be decided upon by a person skilled in the formulation art without excessive experimentation. However by way of illustration an amount of 50 to 100 grams per litre of the composition is usually suitable; although more or less may be used depending upon the particular composition. The composition of the invention may also contain an odourant, such as a pyridine derivative, as described in UK Patent No. 1406881, or n-valeric acid. The compositions may also comprise a pigment or a dye to give them a distinctive colour.

In greenhouse tests, compositions according to the invention containing paraquat have been found to be equivalent in herbicidal effect to commercial aqueous formulations of paraquat, the two types of composition being applied at the same rate of application of active ingredient.

Aqueous compositions according to the invention are readily prepared by adding the various constituents of the formulation to an aqueous solution of a salt of paraquat or diquat or a mixture thereof, with suitable agitation.

In a variation of the invention, there are further provided herbicidal compositions comprising an aqueous solution of a salt of paraquat or diquat, or a mixture thereof, in admixture with a gelling agent that will gel at the pH of human gastric juice, and a purgative. While the compositions contain at least 50 or 100 grams per litre of paraquat or diquat or a mixture thereof, compositions containing 200 grams or more per litre may be prepared.

Preferably the gelling agent is magnesium trisilicate and the purgative is magnesium sulphate. The proportions of gelling agent and purgative present in the composition are similar to those used in the emetic-containing compositions described above.

The constituents and proportions of a composition of this kind are given below by way of example:

| Constituent | Concentration(grams/litre) |
|---|---|
| Paraquat (as dichloride) | 200 |
| Magnesium trisilicate | 100 |
| Magnesium sulphate | 100 |
| Kelzan | 3.0 |
| Water | to 1 litre |

Other ingredients may be included in the compositions as described above for the emetic-containing compositions. Further examples of this type of composition include the compositions described in Examples 1 to 7, but without the inclusion of the Compound A.

If a quantity of the composition containing bipyridylium herbicide, gelling agent, and purgative is inadvertently swallowed, the composition will gel in the stomach. The bipyridylium herbicide will be trapped in the gel, and the purgative will bring about movement of the gel through the gastro-intestinal tract with increased speed, thereby reducing absorption.

The constituents and proportions of a composition of this kind are given below by way of example:

| Constituent | Concentration(grams/litre) |
|---|---|
| Paraquat (as dichloride) | 200 |
| Magnesium sulphate | 100 |
| Compound A | 2.5 |
| Water | to 1 litre |

If a quantity of such a composition is inadvertently swallowed, the combined action of the emetic and purgative will reduce absorption of the bipyridylium herbicide.

The following Examples illustrate the invention.

### EXAMPLE 1

This Example illustrates an aqueous composition according to the invention.

| Constituent | Concentration(grams/litre) |
|---|---|
| Paraquat (as dichloride) | 100 |
| Magnesium trisilicate | 10 |
| Magnesium sulphate | 100 |
| Kelzan | 1.0 |
| Emetic (Compound A) | 1.2 |
| Water | to 1 litre |

### EXAMPLE 2

This Example illustrates an aqueous composition according to the invention.

| Constituent | Concentration(grams/litre) |
|---|---|
| Paraquat (as dichloride) | 200 |
| Magnesium trisilicate | 100 |
| Magnesium sulphate | 100 |
| Kelzan | 3.0 |
| Emetic (Compound A) | 2.5 |
| Water | to 1 litre |

### EXAMPLE 3

This Example illustrates an aqueous composition according to the invention.

| Constituent | Concentration (grams/litre) |
|---|---|
| Paraquat (as dichloride) | 200.00 |
| Synperonic | 35.00 |
| Nansa 1169PS | 117.00 |
| Kelzan | 3.00 |
| Magnesium sulphate heptahydrate | 100.00 |
| Magnesium trisilicate | 10.00 |
| Compound A (see page 7) | 1.65 |
| Pyridine base | 10.00 |
| Sulfacide Blue | 5.00 |
| Silcolapse 5020 | 0.25 |
| Acetic acid 80% solution | to pH 7.0+⁻ 0.5 |
| Water | to 1 litre |

The above composition was prepared by simple admixture of the constituents or aqueous solutions thereof.

The compositions of the constituents indicated by the various trade names are as follows:-

### Synperonic NP8

A surface-active agent comprising a condensate of p-nonylphenol with eight molar proportions of ethylene oxide.

### Nansa 1169 PS

A surface-active agent comprising an aqueous solution of sodium dodecylbenzenesulphonate in a concentration of 30%.

### Kelzan

Xanthan gum, comprising a bacterial polysaccharide, present as a suspending agent.

### Pyridine base

An odourant comprising a mixture of alkyl pyridines, typically comprising methyl ethyl pyridines (40-60%), propylpyridine (20-30%), ethylpyridine (2.5%)picolines (less than 5%) and other alkyl pyridines, most of the mixture distilling in the range 180-220°C.

### Sulfacide Blue

A water-soluble blue dye.

### Silcolapse 5020

A silicone-based antifoaming agent

### EXAMPLE 4

This Example illustrates an aqueous composition according to the invention.

| Constituent | Concentration (grams/litre) |
|---|---|
| Paraquat (as dichloride) | 200.00 |
| Synperonic NP8 | 35.00 |
| Nansa 1169PS | 117.00 |
| Kelzan | 3.00 |
| MgSO₄ 1.5 H₂O | 100.00 |
| Magnesium trisilicate | 100.00 |
| Compound A | 1.65 |
| Sulfacide Blue 5J liquid | 5.00 |
| Silcolapse 5020 | 0.25 |
| Acetic acid 80% solution | to pH 7.0 ⁺⁻ 0.5 |
| Water | to 1 litre |

### EXAMPLE 5

This Example illustrates an aqueous composition according to the invention.

| Constituent | Concentration (grams/litre) |
|---|---|
| Paraquat (as dichloride) | 200.00 |
| Synperonic NP8 | 35.00 |
| Nansa 1169PS | 117.00 |
| Kelzan | 3.00 |
| MgSO₄ 1.5 H₂O | 100.00 |
| Magnesium trisilicate | 100.00 |
| Compound A | 1.65 |
| Pyridine base | 10.00 |
| Sulfacide Blue 5J liquid | 5.00 |
| Silcolapse 5020 | 0.25 |
| Acetic acid 80% solution | to pH 7.0 ⁺⁻ 0.5 |
| Water | to 1 litre |

### EXAMPLE 6

This Example illustrates an aqueous composition according to the invention.

| Constituent | Concentration (grams/litre) |
|---|---|
| Paraquat (as dichloride) | 50.00 |
| Diquat (as dibromide) | 50.00 |
| Synperonic NP8 | 35.00 |
| Nansa 1169PS | 117.00 |
| Kelzan | 3.00 |
| MgSO₄ 1.5 H₂O | 100.00 |
| Magnesium trisilicate | 100.00 |
| Compound A | 1.65 |
| Pyridine bases | 10.00 |
| Sulfacide Blue 5J liquid | 5.00 |
| Silcolapse 5020 | 0.25 |
| Acetic acid 80% solution | to pH 7.0 ⁺⁻ 0.5 |
| Water | to 1 litre |

### EXAMPLE 7

This Example illustrates an aqueous composition according to the invention.

| Constituent | Concentration (grams/litre) |
|---|---|
| Paraquat (as dichloride) | 200.00 |
| Synperonic NP8 | 35.00 |
| Nansa 1169PS | 117.00 |
| Kelzan | 3.00 |
| MgSO₄ 1.5 H₂O | 100.00 |
| Magnesium trisilicate | 50.00 |
| Compound A | 1.65 |
| Pyridine base | 10.00 |
| Sulfacide Blue 5J liquid | 5.00 |
| Silcolapse 5020 | 0.25 |
| Acetic acid 80% solution | to pH 7.0 ⁺⁻ 0.5 |
| Water | to 1 litre |

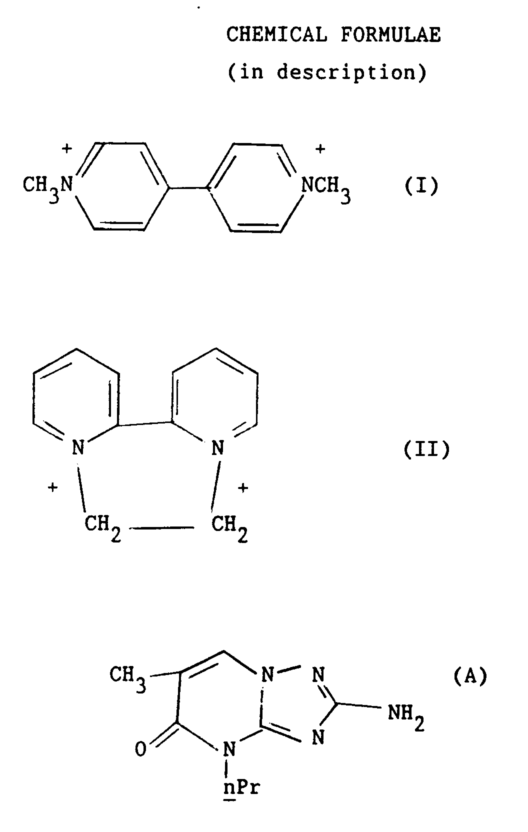

## Claims (Claims for the following Contracting State(s): AT, BE, CH, DE, DK, FR, GB, GR, IT, LI, LU, NL, SE)

1. An aqueous liquid herbicidal composition comprising a salt of paraquat or diquat, or a mixture thereof, in a concentration of at least 50 grams per litre, in admixture with from 10 to 400 grams per litre of a magnesium trisilicate, the composition further comprising an emetic and/or a purgative.

2. An aqueous liquid herbicidal comprising:
(i) a herbicidal component comprising a salt of paraquat or diquat, or a mixture thereof;
(ii) a gelling agent that will gel at the pH of human gastric juice; and (iii) an emetic and/or a purgative;
wherein the ratio of the herbicidal component to the gelling agent is from 1:1 to 20:1.

3. An aqueous liquid herbicidal composition as claimed in claim 1 or claim 2 comprising an aqueous solution of a salt of paraquat or diquat or a mixture thereof in admixture with a gelling agent that will gel at the pH of human gastric juice and an emetic.

4. A composition as claimed in any one of claims 1 to 3 comprising at least 100 grams per litre of paraquat or diquat or a mixture thereof.

5. A composition as claimed in claimed in any one of claims 1 to 4 comprising at least 200 grams per litre of paraquat or diquat or a mixture thereof.

6. A composition as claimed in any of claims 2 to 5 which further comprises a purgative.

7. A composition as claimed in any of claims 2 to 6 wherein the gelling agent comprises magnesium silicate.

8. A composition as claimed in any of claims 2 to 7 wherein the gelling agent comprises magnesium trisilicate.

9. A composition as claimed in any of claims 1 to 8 wherein the emetic comprises 2-amino-6-methyl-5-oxo-4-n-propyl-4,5-dihydro-5-triazolo-[1,5-a]-pyrimidine.

10. A composition as claimed in any of the preceding claims wherein the purgative comprises magnesium sulphate.

11. A composition as claimed in any of the preceding claims which further comprises a suspending agent.

## Claims (Claims for the following Contracting State(s): ES)

1. A process for the preparation of an aqueous liquid herbicidal composition comprising a salt of paraquat or diquat, or a mixture thereof, in a concentration of at least 50 grams per litre, in admixture with from 10 to 400 grams per litre of magnesium trisilicate, the composition further comprising an emetic and/or a purgative, the process comprising adding the magnesium trisilicate and the emetic and/or purgative to an aqueous solution of the salt of paraquat or diquat or a mixture thereof and agitating the mixture.

2. A process for the preparation of an aqueous liquid herbicidal comprising;
(i) a herbicidal component comprising a salt of paraquat or diquat, or a mixture thereof;
(ii) a gelling agent that will gel at the pH of human gastric juice; and (iii) an emetic and/or a purgative;
wherein the ratio of the herbicidal component to the gelling agent is from 1:1 to 20:1; the process comprising adding the gelling agent and the emetic and/or purgative to an aqueous solution of the salt of paraquat or diquat or a mixture thereof and agitating the mixture.

3. A process as claimed in claim 1 or claim 2 wherein the composition comprises an aqueous solution of a salt of paraquat or diquat or a mixture thereof in admixture with a gelling agent that will gel at the pH of human gastric juice and an emetic.

4. A process as claimed in any one of claims 1 to 3 wherein the composition comprises at least 100 grams per litre of paraquat or diquat or a mixture thereof.

5. A process as claimed in claimed in any one of claims 1 to 4 wherein the composition comprises at least 200 grams per litre of paraquat or diquat or a mixture thereof.

6. A process as claimed in any of claims 2 to 5 wherein the composition further comprises a purgative.

7. A process as claimed in any of claims 2 to 6 wherein the gelling agent comprises magnesium silicate.

8. A process as claimed in any of claims 2 to 7 wherein the gelling agent comprises magnesium trisilicate.

9. A process as claimed in any of claims 1 to 8 wherein the emetic comprises 2-amino-6-methyl-5-oxo-4-n-propyl-4,5-dihydro-5-triazolo-[1,5-a]-pyrimidine.

10. A process as claimed in any of the preceding claims wherein the purgative comprises magnesium sulphate.

11. A process as claimed in any of the preceding claims wherein the composition further comprises a suspending agent.

## Patentansprüche (Patentansprüche für folgende(n) Vertragsstaat(en): AT, BE, CH, DE, DK, FR, GB, GR, LT, LI, LU, NL, SE)

1. Wäßrige flüssige Herbizidzusammensetzung, die ein Salz von Paraquat oder Diquat enthalt, oder ein Gemisch daraus, und zwar in einer Konzentration von mindestens 50 g/l, und im Gemisch mit 10 bis 400 g/l Magnesiumtrisilicat, welche Zusammensetzung ferner ein Brechmittel und/oder ein Abführmittel enthält.

2. Flüssiges wäßriges Herbizid, das folgendes enthält: (i) einen herbiziden Bestandteil, der ein Salz von Paraquat oder Diquat enthält, oder ein Gemisch daraus, (ii) ein Geliermittel, das beim pH-Wert des menschlichen Magensaftes geliert, und (iii) ein Brechmittel und/oder ein Abführmittel, wobei das Verhältnis des herbiziden Bestandteils zum Gelierungsmittel 1:1 bis 20:1 beträgt.

3. Wäßrige flüssige Herbizidzusammensetzung nach Anspruch 1 oder 2, die eine wäßrige Lösung eines Salzes von Paraquat oder Diquat oder eines Gemisches daraus im Gemisch mit einem Geliermittel, das beim pH-Wert des menschlichen Magensaftes geliert, und ein Brechmittel enthält.

4. Zusammensetzung nach einem der Ansprüche 1 bis 3, die mindestens 100 g/l Paraquat oder Diquat oder eines Gemisches daraus enthält.

5. Zusammensetzung nach einem der Ansprüche 1 bis 4, die mindestens 200 g/l Paraquat oder Diquat oder eines Gemisches daraus enthält.

6. Zusammensetzung nach einem der Ansprüche 2 bis 5, die außerdem ein Anführmittel enthält.

7. Zusammensetzung nach einem der Ansprüche 2 bis 6, wobei das Geliermittel Magnesiumsilicat umfaßt.

8. Zusammensetzung nach einem der Ansprüche 2 bis 7, wobei das Geliermittel Magnesiumtrisilicat umfaßt.

9. Zusammensetzung nach einem der Ansprüche 1 bis 8, wobei das Brechmittel 2-Amino-6-methyl-5-oxo-4-n-propyl-4,5-dihydro-5-triazolo-[1,5-a]-pyrimidin umfaßt.

10. Zusammensetzung nach einem der vorhergehenden Ansprüche, wobei das Abführmittel Magnesiumsulfat umfaßt.

11. Zusammensetzung nach einem der vorhergehenden Ansprüche, die außerdem ein Suspendiermittel enthält.

## Patentansprüche (Patentansprüche für folgende(n) Vertragsstaat(en): ES)

1. Verfahren zur Herstellung einer wäßrigen flüssigen herbiziden Zusammensetzung, die ein Salz von Paraquat oder Diquat oder ein Gemisch davon in einer Konzentration von mindestens 50 g/l im Gemisch mit 10 bis 400 g/l Magnesiumtrisilicat enthält, wobei die Zusammensetzung außerdem ein Brechmittel und/oder ein Abführmittel enthält, bei dem das Magnesiumtrisilicat und das Brechmittel und/oder das Abführmittel zu einer wäßrigen Lösung des Salzes von Paraquat oder Diquat oder eines Gemisches daraus gegeben und das Gemisch gerührt wird.

2. Verfahren zur Herstellung einer wäßrigen flüssigen herbiziden Zusammensetzung, die folgendes enthält:
(i) einen herbiziden Bestandteil, der ein Salz von Paraquat oder Diquat oder ein Gemisch davon umfaßt,
(ii) ein Geliermittel, das beim pH-Wert des menschlichen Magensaftes geliert, und
(iii) ein Brechmittel und/oder ein Anführmittel,
wobei das Verhältnis herbizider Bestandteil zu Geliermittel 1:1 bis 20:1 beträgt, bei dem das Geliermittel und das Brechmittel und/oder Abführmittel zu einer wäßrigen Lösung des Salzes von Paraquat oder Diquat oder eines Gemisches davon gegeben und das Gemisch gerührt wird.

3. Verfahren nach Anspruch 1 oder 2, wobei die Zusammensetzung eine wäßrige Lösung eines Salzes von Paraquat oder Diquat oder eines Gemisches daraus im Gemisch mit einem Geliermittel, das beim pH-Wert des menschlichen Magensaftes geliert, und ein Brechmittel enthält.

4. Verfahren nach einem der Ansprüche 1 bis 3, wobei die Zusammensetzung mindestens 100 g/l Paraquat oder Diquat oder eines Gemisches daraus enthält.

5. Verfahren nach einem der Ansprüche 1 bis 4, wobei die Zusammensetzung mindestens 200 g/l Paraquat oder Diquat oder eines Gemisches daraus enthält.

6. Verfahren nach einem der Ansprüche 2 bis 5, wobei die Zusammensetzung außerdem ein Abführmittel enthält.

7. Verfahren nach einem der Ansprüche 2 bis 6, wobei das Geliermittel Magnesiumsilicat umfaßt.

8. Verfahren nach einem der Ansprüche 2 bis 7, wobei das Geliermittel Magnesiumtrisilicat umfaßt.

9. Verfahren nach einem der Ansprüche 1 bis 8, wobei das Brechmittel 2-Amino-6-methyl-5-oxo-4-n-propyl-4,5-dihydro-5,-triazolo-[1,5-a]-pyrimidin umfaßt.

10. Verfahren nach einem der vorhergehenden Ansprüche, wobei das Abführmittel Magnesiumsulfat umfaßt.

11. Verfahren nach einem der vorhergehenden Ansprüche, wobei die Zusammensetzung ferner ein Suspendiermittel enthält.

## Revendications (Revendications pour l'(les) Etat(s) contractant(s) suivant(s): AT, BE, CH, DE, DK, FR, GB, GR, IT, LI, LU, NL, SE)

1. Composition herbicide liquide aqueuse comprenant un sel de paraquat ou de diquat, ou un de leurs mélanges, à une concentration d'au moins 50 grammes par litre, en mélange avec 10 à 400 grammes par litre d'un trisilicate de magnésium, ladite composition comprenant en outre un agent émétique et/ou un purgatif.

2. Composition herbicide liquide aqueuse comprenant :
(i) un constituant herbicide contenant un sel de paraquat ou de diquat, ou un de leurs mélanges ;
(ii) un agent gélifiant qui provoque une gélification au pH du suc gastrique humain ; et
(iii) un agent émétique et/ou un purgatif ;
dans laquelle le rapport du constituant herbicide à l'agent gélifiant est compris dans l'intervalle de 1:1 à 20:1.

3. Composition herbicide liquide aqueuse suivant la revendication 1 ou la revendication 2, comprenant une solution aqueuse d'un sel de paraquat ou de diquat, ou d'un de leurs mélanges, en mélange avec un agent gélifiant qui provoque une gélification au pH du suc gastrique humain, et un agent émétique.

4. Composition suivant l'une quelconque des revendications 1 à 3, comprenant au moins 1O0 grammes par litre de paraquat ou de diquat, ou d'un de leurs mélanges.

5. Composition suivant l'une quelconque des revendications 1 à 4, comprenant au moins 200 grammes par litre de paraquat ou de diquat, ou d'un de leurs mélanges.

6. Composition suivant l'une quelconque des revendications 2 à 5, qui comprend en outre un purgatif.

7. Composition suivant l'une quelconque des revendications 2 à 6, dans laquelle l'agent gélifiant comprend du silicate de magnésium.

8. Composition suivant l'une quelconque des revendications 2 à 7, dans laquelle l'agent gélifiant comprend du trisilicate de magnésium.

9. Composition suivant l'une quelconque des revendications 1 à 8, dans laquelle l'agent émétique comprend la 2-amino-6-méthyl-5-oxo-4-n-propyl-4,5-dihydro-5-triazolo-[1,5-a]-pyrimidine.

10. Composition suivant l'une quelconque des revendications précédentes, dans laquelle le purgatif comprend du sulfate de magnésium.

11. Composition suivant l'une quelconque des revendications précédentes, qui comprend en outre un agent de mise en suspension.

## Revendications (Revendications pour l'(les) Etat(s) contractant(s) suivant(s): ES)

1. Procédé de préparation d'une composition herbicide liquide aqueuse comprenant un sel de paraquat ou de diquat, ou un de leurs mélanges, à une concentration d'au moins 50 grammes par litre, en mélange avec 10 à 400 grammes par litre de trisilicate de magnésium, ladite composition comprenant en outre un agent émétique et/ou un purgatif, procédé qui comprend l'addition du trisilicate de magnésium et de l'agent émétique et/ou du purgatif à une solution aqueuse du sel de paraquat ou de diquat ou d'un de leurs mélanges, et l'agitation du mélange.

2. Procédé de préparation d'une composition herbicide liquide aqueuse comprenant :
(i) un constituant herbicide comprenant un sel de paraquat ou de diquat, ou un de leurs mélanges ;
(ii) un agent gélifiant qui provoque une gélification au pH du suc gastrique humain ; et
(iii) un agent émétique et/ou un purgatif ;
dans lequel le rapport du constituant herbicide à l'agent gélifiant est compris dans l'intervalle de 1:1 à 20:1 ; procédé comprenant l'addition de l'agent gélifiant et de l'agent émétique et/ou du purgatif à une solution aqueuse du sel de paraquat ou de diquat ou d'un de leurs mélanges, et l'agitation du mélange.

3. Procédé suivant la revendication 1 ou la revendication 2, dans lequel la composition comprend une solution aqueuse d'un sel de paraquat ou de diquat, ou d'un de leurs mélanges, en mélange avec un agent gélifiant qui provoque une gélification au pH du suc gastrique humain, et un agent émétique.

4. Procédé suivant l'une quelconque des revendications 1 à 3, dans lequel la composition comprend au moins 1O0 grammes par litre de paraquat ou de diquat, ou d'un de leurs mélanges.

5. Procédé suivant l'une quelconque des revendications 1 à 4, dans lequel la composition comprend au moins 200 grammes par litre de paraquat ou de diquat, ou d'un de leurs mélanges.

6. Procédé suivant l'une quelconque des revendications 2 à 5, dans lequel la composition comprend en outre un purgatif.

7. Procédé suivant l'une quelconque des revendications 2 à 6, dans lequel l'agent gélifiant comprend du silicate de magnésium.

8. Procédé suivant l'une quelconque des revendications 2 à 7, dans lequel l'agent gélifiant comprend du trisilicate de magnésium.

9. Procédé suivant l'une quelconque des revendications 1 à 8, dans lequel l'agent émétique comprend de la 2-amino-6-méthyl-5-oxo-4-n-propyl-4,5-dihydro-5-triazolo-[1,5-a]-pyrimidine.

10. Procédé suivant l'une quelconque des revendications précédentes, dans lequel le purgatif comprend du sulfate de magnésium.

11. Procédé suivant l'une quelconque des revendications précédentes, dans lequel la composition comprend en outre un agent de mise en suspension.
